# EUROPÄISCHE PATENTSCHRIFT

(11) **EP 2 836 698 B1**
(45) Veröffentlichungstag und Bekanntmachung des Hinweises auf die Patenterteilung: **08.05.2019**
(21) Anmeldenummer: 13716747.4
(22) Anmeldetag: 28.03.2013
(51) Int. Cl.: F02M 63/02, F16K 17/24

(54) **DURCHFLUSSBEGRENZER MIT KUGEL UND DROSSEL**
FLOW RESTRICTOR WITH BALL AND THROTTLE
LIMITEUR DE DÉBIT À BILLE ET ÉTRANGLEMENT

(30) Priorität: 10.04.2012 AT 4232012
(43) Veröffentlichungstag der Anmeldung: 18.02.2015
(73) Patentinhaber: Robert Bosch GmbH, 70442 Stuttgart (DE)
(72) Erfinder: GIESSAUF, Helmut, A-5020 Salzburg (AT)
(86) Internationale Anmeldenummer: PCT/EP2013/056777
(87) Internationale Veröffentlichungsnummer: WO 2013/152966

(56) Entgegenhaltungen:
- WO-A1-2004/063558
- FR-A1- 2 741 137
- GB-A- 2 322 413
- US-A- 3 481 542

## Beschreibung

Die Erfindung betrifft eine Vorrichtung zur Begrenzung der Zufuhr von Kraftstoff aus einer Hochdruckversorgung über einen steuerbaren Injektor in den Brennraum einer Brennkraftmaschine, umfassend ein Gehäuse mit einem druckspeicherversorgungsseitigen Gehäuseeinlass und einen injektorseitigen Gehäuseauslass, die über wenigstens einen eine Drossel aufweisenden Kanal miteinander hydraulisch verbunden sind, und ein in einer Kammer zwischen einer Ausgangsstellung und einer Endstellung längsverschiebbares und entgegen der Strömungsrichtung federvorgespanntes Schließglied, das eine Strömungsverbindung zwischen dem Gehäuseeinlass und dem Gehäuseauslass steuert.

Bei Einspritzsystemen mit hohen Systemdrücken, z.B. Common-Rail-Systemen, können unter ungünstigen Umständen Leckagen auftreten, sei es im Leitungssystem oder durch defekte Einspritzventile. Einspritzventile mit klemmenden Düsennadeln, die zu Dauereinspritzungen in den Brennraum führen, können erhebliche Schäden verursachen. Diese Schäden können zum Brand des Fahrzeuges oder zur Zerstörung des Motors führen.

Zur Vermeidung dieser Gefahren sind Durchflussmengenbegrenzer mit Schließfunktion bekannt, die bei Überschreiten einer maximalen Entnahmemenge aus der Hochdruckversorgung den Zulauf zu dem betroffenen Injektor verschließen und damit den einspritzpumpenseitigen Hochdruck von der Einspritzventilseite abkoppeln. Ein derartiger Durchflussmengenbegrenzer ist beispielsweise aus der US 3481542 bekannt.

Aus der DE 2207643 A1 ist ein Durchflussmengenbegrenzer bekannt, der zwischen einem Kraftstoffdruckspeicher und einem Einspritzventil zwischengeschaltet ist. Dieser Durchflussmengenbegrenzer besteht aus einem Zylinder bzw. einer Kammer, in dem bzw. in der ein kolbenartiges Schließglied verschiebbar ist. Der Kolben wird hochdruckspeicherseitig von Kraftstoff angeströmt und wird dadurch entgegen der Kraft einer Feder zur Injektorseite gedrückt. Durch den Kolben verläuft ein die beiden Enden des Zylinders verbindender Kanal mit einer Drosselstelle. Im Normalbetrieb befindet sich der Kolben zunächst in seiner Ruhelage, d.h. am Anschlag auf der Seite des Hochdruckspeichers. Durch eine Einspritzung sinkt der Druck auf der Injektorseite leicht ab, wodurch der Kolben in Richtung Injektor bewegt wird. Die Volumenentnahme durch den Injektor wird nicht durch die Drossel kompensiert, sondern durch das vom Kolben verdrängte Volumen, da die Drossel für einen so schnellen Ausgleich zu klein ist. Der Kolben stoppt bei Normalbetrieb kurz vorm Dichtsitz, d.h. dem Verschluss der Leitung. Die Feder und die Drossel sind so dimensioniert, dass bei maximaler Einspritzmenge (einschließlich einer Sicherheitsmenge) der Kolben wieder zum Anschlag auf der Seite des Hochdruckspeichers gelangen kann, wenn in der Ruhephase des Injektors Kraftstoff durch die Drossel nachfließt und somit den Druckunterschied ausgleicht. Der Kolben bewegt sich somit ständig zwischen einer hochdruckspeicherseitigen Ausgangsstellung und einer einspritzventilseitigen Endstellung differenzdruckgesteuert hin und her.

Bei jeglicher Störung, d.h. einem größeren Durchfluss, wird der Kolben bei der Entnahme durch den Injektor bis in den Dichtsitz gedrückt. Er verbleibt dann dort bis zum Abstellen des Motors und verschließt damit den Zulauf zum Injektor.

Ähnlich arbeitende Ausführungen sind auch mit einem als Kugel ausgebildeten Schließglied bekannt. Eine Kugel wird in einer Bohrung auf einen Anschlag gedrückt und bewegt sich durch die während der Einspritzung entstehende Strömung auf Grund des Druckunterschiedes bei Kugelumströmung in Richtung eines Dichtsitzes. Bei Überschreiten einer maximalen Einspritzmenge geht die Kugel in den Sitz und verhindert eine weitere Strömung in den Injektor, wodurch eine Dauereinspritzung verhindert wird.

Ein Durchflussmengenbegrenzer mit einer Kugel für eine Gasströmung ist aus der FR 2741137 bekannt. Bei einer zerstörten Leitung stromabwärts des Durchflussmengenbegrenzers erhöht sich die Strömungsgeschwindigkeit schockartig, und der in einer Kammer auf die Kugel wirkende Gesamtdruck reduziert sich, so dass die Kugel in einen Dichtsitz gedrückt wird und die Gasströmung beendet.

Weitere Varianten sind bekannt, bei denen ein Kegel die Funktion der Kugel übernimmt.

Die beschriebenen Konstruktionen haben den Nachteil, dass die Funktion nur für eine vorgegebene Kraftstoffviskosität entsprechend den Anforderungen ausgelegt werden kann. Bei zu hohen Viskositäten schließt der Durchflussbegrenzer bei zu kleinen Einspritzmengen. Zu niedrige Viskositäten führen zum Ausfall der Schließfunktion bei niedrigen Einspritzdrücken.

Die vorliegende Erfindung zielt daher darauf ab, die Schließfunktion in einem erweiterten Viskositätsbereich sicherzustellen. Weiters zielt die Erfindung darauf ab, die Verschleißfestigkeit zu erhöhen.

Zur Lösung dieser Aufgabe ist der Durchflussmengenbegrenzer der eingangs genannten Art erfindungsgemäß im Wesentlichen derart weitergebildet, dass der wenigstens eine Kanal radial außerhalb der Kammer verläuft. Der Kanal ist hierbei bevorzugt derart angeordnet, dass er das einlassseitige und das auslassseitige Ende des Gehäuses außerhalb der Kammer miteinander in Verbindung bringt. Wesentlich ist, dass der Kanal weder durch die Kammer noch durch das Schließglied verläuft, da erfindungsgemäß verhindert werden soll, dass das Schließglied umströmt oder durchströmt wird. Die Erfindung bezieht sich darauf, den Druckabfall, der bei den eingangs beschriebenen herkömmlichen Ausführungsformen beim Umströmen oder Durchströmen des Schließglieds entsteht und der viskositätsabhängig ist, durch den Druckabfall an einer Drossel, der viskositätsunabhängig ist, zu ersetzen. Zusätzlich wird die ebenfalls viskositätsabhängige Rückhubbewegung des Schließglieds vermieden, da sich das Schließglied bei zulässigen Einspritzmengen nicht bewegt. Ein Schließen des Durchflussbegrenzers erfolgt erst nach Überschreiten einer vorgegebenen maximalen Einspritzmenge bzw. bei Dauereinspritzung.

Bevorzugt ist vorgesehen, dass die Kammer druckversorgungsseitig mit dem Gehäuseeinlass und injektorseitig mit dem Gehäuseauslass in Verbindung steht.

Die erfindungsgemäße_Konstruktion sieht vor, dass die Kammer in einem zylinderförmigen Bauteil ausgebildet ist, dessen Außenmantel unter Ausbildung eines Ringkanals in radialem Abstand von einer zylinderförmigen Innenwand des Gehäuses angeordnet ist und dessen druckversorgungsseitige Einlauföffnung in axialem Abstand vom Gehäuseeinlass angeordnet ist, wobei der Ringkanal über wenigstens eine den zylinderförmigen Bauteil durchsetzende Drosselbohrung mit der Kammer in Verbindung steht.

Mit Vorteil weist die Kammer eine erste, dem Gehäuseeinlass zugewandte Sitzfläche auf, mit der das Schließglied in der Ausgangsstellung zusammenwirkt, und eine zweite, dem Gehäuseauslass zugewandte Sitzfläche, mit der das Schließglied in der Endstellung zusammenwirkt, wobei die Drosselbohrung in einem zwischen der ersten und der zweiten Sitzfläche angeordneten axialen Bereich der Kammer mündet. Bevorzugt ist das Schließglied von einer Kugel gebildet.

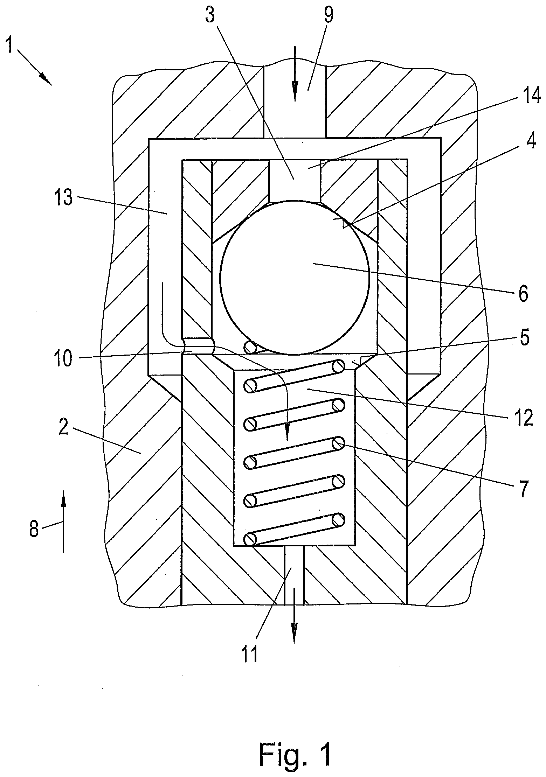

Die Erfindung wird nachfolgend anhand eines in der Zeichnung schematisch dargestellten Ausführungsbeispiels näher erläutert. Fig.1 zeigt hierbei eine Schnittdarstellung der erfindungsgemäßen Vorrichtung.

In Fig. 1 ist mit 1 ein erfindungsgemäßer Durchflussbegrenzer bezeichnet, der eine in einem Gehäuse 2 angeordnete Kammer 3 aufweist. In der Kammer 3 ist ein oberer Dichtsitz 4 und ein unterer Dichtsitz 5 für ein Schließglied 6, hier im Wesentlichen Kugelförmig, angeordnet. Die Kugel bzw. das Schließglied 6 wird durch die Kraft einer Druckfeder 7 in Richtung des Pfeils 8 entgegen der Strömungsrichtung des Kraftstoffes in den oberen Dichtsitz 4 gedrückt. Im Betrieb strömt Kraftstoff vom druckversorgungsseitigen Gehäuseeinlass 9, der z.B. mit einem Hochdruckspeicher in Verbindung steht, durch die Drossel 10 zum injektorseitigen Gehäuseauslass 11. Durch die Drossel 10 entsteht ein Druckverlust zwischen dem Raum oberhalb des oberen Dichtsitzes und dem Federraum 12. Bei Überschreiten eines definierten Drosseldurchflusses bewegt sich die Kugel 6 auf Grund des Druckunterschieds gegen die Federkraft in Richtung des unteren Dichtsitz 5 und beendet damit die Einspritzung. Durch Variation von Federkraft, Durchmesser der Drossel 10 und oberen Dichtsitzdurchmesser kann das Ende der Einspritzung eingestellt werden.

Wesentlich bei der vorliegenden Erfindung ist, dass die Zweigleitung 13, die zur Drossel 10 führt, in Abstand von der Einlauföffnung 14 angeordnet ist und die Drossel 10 daher außerhalb der Kammer 3 angeordnet ist, wodurch die viskositätsunabhängige Funktionsweise der erfindungsgemäßen Vorrichtung erreicht wird.

## Patentansprüche

1. Vorrichtung zur Begrenzung der Zufuhr von Kraftstoff aus einer Hochdruckversorgung über einen steuerbaren Injektor in den Brennraum einer Brennkraftmaschine, umfassend ein Gehäuse (2) mit einem druckversorgungsseitigen Gehäuseeinlass (9) und einen injektorseitigen Gehäuseauslass (11), die über wenigstens einen eine Drossel (10) aufweisenden Kanal miteinander hydraulisch verbunden sind, und ein in einer Kammer (3) zwischen einer Ausgangsstellung und einer Endstellung längsverschiebbares und entgegen der Strömungsrichtung federvorgespanntes Schließglied (6), das eine Strömungsverbindung zwischen dem Gehäuseeinlass (9) und dem Gehäuseauslass (11) steuert, wobei die Kammer (3) durch eine Einlauföffnung (14) mit dem Gehäuseeinlass (9) verbunden ist, wobei die Einlauföffnung (14) von dem Schließglied (6) verschließbar ist, wobei der wenigstens eine Kanal radial außerhalb der Kammer (3) verläuft, wobei der wenigstens eine Kanal einen Ringkanal und wenigstens eine Drosselbohrung umfasst, wobei die Kammer (3) in einem zylinderförmigen Bauteil ausgebildet ist, dessen Außenmantel unter Ausbildung des Ringkanals in radialem Abstand von einer zylinderförmigen Innenwand des Gehäuses (2) angeordnet ist und dessen druckversorgungsseitige Einlauföffnung (14) in axialem Abstand vom Gehäuseeinlass (9) angeordnet ist, wobei das Schließglied (6) von einer Kugel gebildet ist,
**dadurch gekennzeichnet, dass** der Ringkanal über die wenigstens eine das zylinderförmige Bauteil durchsetzende Drosselbohrung mit der Kammer (3) in Verbindung steht und wobei die Drossel (10) so ausgebildet ist, dass durch sie ein Druckverlust zwischen der Einlauföffnung (14) und der Kammer (3) entsteht.

2. Vorrichtung nach Anspruch 1, **dadurch gekennzeichnet, dass** die Kammer (3) druckversorgungsseitig mit dem Gehäuseeinlass (9) und injektorseitig mit dem Gehäuseauslass (11) in Verbindung steht.

3. Vorrichtung nach einem der Ansprüche 1 oder 2, **dadurch gekennzeichnet, dass** die Kammer (3) eine erste, dem Gehäuseeinlass (9) zugewandte Sitzfläche aufweist, mit der das Schließglied (6) in der Ausgangsstellung zusammenwirkt, und eine zweite, dem Gehäuseauslass (11) zugewandte Sitzfläche aufweist, mit der das Schließglied (6) in der Endstellung zusammenwirkt, und dass die Drosselbohrung in einem zwischen der ersten und der zweiten Sitzfläche angeordneten axialen Bereich der Kammer (3) mündet.

## Claims

1. Device for limiting the feed of fuel out of a high-pressure supply via a controllable injector into the combustion space of an internal combustion engine, comprising a housing (2) with a pressure supply-side housing inlet (9) and an injector-side housing outlet (11), which are connected hydraulically to one another via at least one duct having a throttle (10), and a closing member (6) which is longitudinally displaceable in a chamber (3) between an initial position and an end position and is spring-prestressed opposite to the flow direction and which controls a flow connection between the housing inlet (9) and the housing outlet (11), wherein the chamber (3) is connected to the housing inlet (9) by an inflow orifice (14), wherein the inflow orifice (14) can be closed by the closing member (6), wherein the at least one duct runs radially outside the chamber (3), wherein the at least one duct comprises an annular duct and at least one throttle bore, wherein the chamber (3) is formed in a cylindrical component, the outer casing of which is arranged at a radial distance from a cylindrical inner wall of the housing (2) so as to form the annular duct and the pressure supply-side inflow orifice (14) of which is arranged at an axial distance from the housing inlet (9), wherein the closing member (6) is formed by a ball, **characterized in that** the annular duct is connected to the chamber (3) via the at least one throttle bore passing through the cylindrical component and wherein the throttle (10) is formed so that a pressure loss occurs between the inlet orifice (14) and the chamber (3) as a result thereof.

2. Device according to Claim 1, **characterized in that** the chamber (3) is connected on the pressure supply side to the housing inlet (9) and on the injector side to the housing outlet (11).

3. Device according to either of Claims 1 and 2, **characterized in that** the chamber (3) has a first seat surface which faces the housing inlet (9) and with which the closing member (6) cooperates in the initial position, and has a second seat surface which faces the housing outlet (11) and with which the closing member (6) cooperates in the end position, and **in that** the throttle bore issues in an axial region of the chamber (3), said axial region being arranged between the first and the second seat surface.

## Revendications

1. Dispositif pour limiter l'alimentation en carburant à partir d'une alimentation haute pression par le biais d'un injecteur commandable dans la chambre de combustion d'un moteur à combustion interne, comprenant un boîtier (2) avec une entrée de boîtier (9) du côté de l'alimentation sous pression et une sortie de boîtier (11) du côté de l'injecteur, qui sont connectées l'une à l'autre hydrauliquement par le biais d'au moins un canal présentant un étranglement (10), et un organe de fermeture (6) pouvant être déplacé longitudinalement dans une chambre (3) entre une position de départ et une position de fin de course et précontraint par ressort à l'encontre de la direction d'écoulement, qui commande une connexion fluidique entre l'entrée de boîtier (9) et la sortie de boîtier (11), la chambre (3) étant connectée à l'entrée de boîtier (9) par une ouverture d'entrée (14), l'ouverture d'entrée (14) pouvant être fermée par l'organe de fermeture (6), l'au moins un canal s'étendant radialement à l'extérieur de la chambre (3), l'au moins un canal comprenant un canal annulaire et au moins un alésage d'étranglement, la chambre (3) étant réalisée dans un composant cylindrique dont l'enveloppe extérieure, constituant le canal annulaire, est disposée à distance radiale d'une paroi interne cylindrique du boîtier (2) et dont l'ouverture d'entrée (14) du côté de l'alimentation sous pression, est disposée à distance axiale de l'entrée de boîtier (9), l'organe de fermeture (6) étant formé par une bille,
**caractérisé en ce que** le canal annulaire est en liaison avec la chambre (3) par le biais de l'au moins un alésage d'étranglement traversant le composant cylindrique et l'étranglement (10) étant réalisé de telle sorte qu'il se produise une perte de pression à travers lui entre l'ouverture d'entrée (14) et la chambre (3).

2. Dispositif selon la revendication 1, **caractérisé en ce que** la chambre (3) est en liaison avec l'entrée de boîtier (9) du côté de l'alimentation sous pression et avec la sortie de boîtier (11) du côté de l'injecteur.

3. Dispositif selon l'une quelconque des revendications 1 ou 2, **caractérisé en ce que** la chambre (3) présente une première surface de siège tournée vers l'entrée de boîtier (9), avec laquelle l'organe de fermeture (6) coopère dans la position de départ, et une deuxième surface de siège tournée vers la sortie de boîtier (11), avec laquelle l'organe de fermeture (6) coopère dans la position de fin de course, et **en ce que** l'alésage d'étranglement débouche dans une région axiale de la chambre (3) disposée entre la première et la deuxième surface de siège.
